# EUROPÄISCHE PATENTSCHRIFT

(11) **EP 3 687 933 B1**
(45) Veröffentlichungstag und Bekanntmachung des Hinweises auf die Patenterteilung: **28.10.2026**
(21) Anmeldenummer: 18762880.5
(22) Anmeldetag: 11.09.2018
(51) Int. Cl.: B66B 19/00

(54) **LOKALISIERUNGSSYSTEM UND VERFAHREN ZUR BESTIMMUNG EINER AKTUELLEN POSITION IN EINEM AUFZUGSCHACHT EINER AUFZUGANLAGE**
POSITION SYSTEM AND METHOD FOR DETERMINING THE CURRENT POSITION IN AN ELEVATOR SHAFT
SYSTÈME DE LOCALISATION ET PROCÉDÉ DE DÉTERMINATION D'UNE POSITION ACTUELLE DANS UNE CAGE D'ASCENSEUR

(30) Priorität: 27.09.2017 EP 17193504
(43) Veröffentlichungstag der Anmeldung: 05.08.2020
(73) Patentinhaber: INVENTIO AG, 6052 Hergiswil (CH)
(72) Erfinder: CAMBRUZZI, Andrea, 8057 Zürich (CH); BÜTLER, Erich, 6030 Ebikon (CH); ZIMMERLI, Philipp, 4624 Härkingen (CH); BITZI, Raphael, 6003 Luzern (CH)
(74) Vertreter: Inventio AG
(86) Internationale Anmeldenummer: PCT/EP2018/074362
(87) Internationale Veröffentlichungsnummer: WO 2019/063277

(56) Entgegenhaltungen:
- WO-A1-2017/167719
- WO-A1-2018/041815
- JP-A- 2007 008 675
- JP-A- H0 640 679
- JP-A- H04 213 580

## Beschreibung

Die Erfindung betrifft ein Lokalisierungssystem zur Bestimmung einer aktuellen Position in einem sich in einer Haupterstreckungsrichtung erstreckenden Aufzugschacht einer Aufzuganlage gemäss Anspruch 1 und ein Verfahren zur Bestimmung einer aktuellen Position eines Lokalisierungssystems in einem sich in einer Haupterstreckungsrichtung erstreckenden Aufzugschacht einer Aufzuganlage gemäss Anspruch 9.

In der nicht vorveröffentlichten WO 2017/167719 A1 wird eine Montagevorrichtung zur Durchführung eines Installationsvorgangs in einem Aufzugschacht einer Aufzuganlage mit einem Lokalisierungssystem zur Bestimmung einer aktuellen Position im Aufzugschacht beschrieben. Die Montagevorrichtung verfügt über eine Installationskomponente in Form eines Industrieroboters, welcher einen Sensor aufnehmen kann, mittels welchem die relative Lage eines langestreckten, im Aufzugschacht angeordneten Referenzelements bezüglich mindestens zwei unterschiedlicher Sensorpositionen und damit Positionen der Installationskomponente bestimmt werden kann. Aus den Messergebnissen des Sensors kann auf die aktuelle Lage Position der Montagevorrichtung im Aufzugschacht geschlossen werden. Das Anfahren der beiden genannten Sensorpositionen nimmt eine gewisse Zeit in Anspruch. Darüber hinaus ist mit diesem Lokalisierungssystem eine Bestimmung der Position während einer Verlagerung der Montagevorrichtung im Aufzugschacht nicht möglich.

In der JPH 04213580 A wird ein Lokalisierungssystem zur Bestimmung einer aktuellen Position einer beweglichen Plattform im Aufzugschacht beschrieben. Das Lokalisierungssystem weist insgesamt vier Messeinheiten auf, mittels welchen die Orientierung des Lokalisierungssystems gegenüber zwei langgestreckten Referenzelementen bestimmt werden kann. Das Lokalisierungssystem verfügt ausserdem über ein Höhenmesssystem, mittels welchem die aktuelle Höhe des Lokalisierungssystems bestimmt werden kann. Aus der Orientierung gegenüber den Referenzelementen und der Höhe wird die Position des Lokalisierungssystems im Aufzugschacht bestimmt. Die JPH 04213580 A offenbart die Präambel des Anspruchs 1.

Die WO 2018/041815 A1 beschreibt ein Messsystem und ein Verfahren zum Vermessen eines Aufzugschachts einer Aufzuganlage.

Demgegenüber ist es insbesondere die Aufgabe der Erfindung, ein Lokalisierungssystem und Verfahren zur Bestimmung einer aktuellen Position in einem Aufzugschacht einer Aufzuganlage vorzuschlagen, mittels welchen eine schnelle Bestimmung der Position möglich ist und die Bestimmung insbesondere unabhängig vom Bewegungszustand des Lokalisierungssystems durchgeführt werden kann. Erfindungsgemäss wird diese Aufgabe mit einem Lokalisierungssystem zur Bestimmung einer aktuellen Position in einem sich in einer Haupterstreckungsrichtung erstreckenden Aufzugschacht einer Aufzuganlage mit den Merkmalen des Anspruchs 1 und einem Verfahren zur Bestimmung einer aktuellen Position eines Lokalisierungssystems in einem sich in einer Haupterstreckungsrichtung erstreckenden Aufzugschacht einer Aufzuganlage mit den Merkmalen des Anspruchs 9 gelöst.

Das erfindungsgemässe Lokalisierungssystem zur Bestimmung einer aktuellen Position in einem sich in einer Haupterstreckungsrichtung erstreckenden Aufzugschacht einer Aufzuganlage umfasst einen ersten Entfernungssensor, mittels welchem ein erster Abstand und ein zum ersten Abstand senkrechter, zweiter Abstand zu einem ersten Referenzelement gemessen werden kann, sowie einen Neigungssensor, mittels welchem eine Rotation um eine horizontal verlaufende erste Achse und eine horizontal verlaufende, zur ersten Achse senkrechten, zweiten Achse gemessen werden kann und ein Messsystem, mittels welchem eine Position des Lokalisierungssystems in Haupterstreckungsrichtung des Aufzugschachts bestimmt werden kann.

Die Messgrössen der genannten Sensoren und des genannten Messsystems werden von einer Steuerungseinrichtung des Lokalisierungssystems ausgewertet. Die Steuerungseinrichtung bestimmt auf Basis der Messgrössen, also auf Basis des ersten Abstands, des zweiten Abstands, der Rotation um die horizontal verlaufende erste Achse, der Rotation um die horizontal verlaufende, zur ersten Achse senkrechten, zweiten Achse gemessen und der Position des Lokalisierungssystems in Haupterstreckungsrichtung die aktuelle Position des Lokalisierungssystems im Aufzugschacht. Sie ist also dazu vorgesehen, die aktuelle Position des Lokalisierungssystems im Aufzugschacht auf Basis der genannten Messgrössen zu bestimmen.

Beim erfindungsgemässen Lokalisierungssystem kann der Entfernungssensor zur Bestimmung der aktuellen Position an einer festen Position gegenüber dem genannten Referenzelement verbleiben, er muss also nicht in verschiedene Positionen gegenüber dem Referenzelement gebracht werden. Die Bestimmung der aktuellen Position kann damit besonders schnell und auch während einer Verlagerung des Lokalisierungssystems im Aufzugschacht erfolgen.

Der erste und zweite Abstand zum ersten Referenzelement wird mittels des Entfernungssensors insbesondere gleichzeitig gemessen.

Das erfindungsgemässe Lokalisierungssystem kann zu unterschiedlichsten Zwecken verwendet werden. Es kann beispielsweise dazu verwendet werden, die Position einer Montagevorrichtung in einem Aufzugschacht zu bestimmen, die Installationsschritte zumindest teilweise automatisiert durchführen kann. Es kann auch verwendet werden, um einen Aufzugschacht zu vermessen und ggf. ein digitales Modell des Aufzugschachts zu erstellen. Bei der Vermessung eines Aufzugschachts beispielsweise mittels eines Laserscanners ist es notwendig, dass die Position des Laserscanners im Aufzugschacht bekannt ist. Darüber hinaus kann das erfindungsgemässe Lokalisierungssystem auch dazu genutzt werden, Montagepositionen von Schachtmaterial, beispielsweise von so genannten Schienenbügeln oder Führungsschienen zu bestimmen.

Ein starrer Körper hat eine Bewegungsfreiheit in insgesamt sechs Freiheitsgraden. Er kann seine Position durch Translation entlang der drei senkrechten Achsen vor/zurück (x-Achse), links/rechts (y-Achse) und rauf/runter (z-Achse) kombiniert mit Veränderungen der Orientierung durch Rotationen um die drei senkrechten Achsen, bezeichnet als Rollen (Rotation um die Längsachse bzw. x-Achse), Nicken (Rotation um die Querachse bzw. y-Achse) und Gieren (Rotation um die Vertikalachse bzw. z-Achse), frei verändern. Um die Position eines starren Körpers wie beispielsweise eines Lokalisierungssystems eindeutig zu beschreiben, müssen seine Positionen in Richtung der genannten drei Achsen und die Rotationen um die genannten drei Achsen (x-, y- und z-Achse) angegeben werden. Das erfindungsgemässe Lokalisierungssystem ist insbesondere dafür vorgesehen, die genannten drei Positionen und die drei Rotationen zu bestimmen.

Der Aufzugschacht verläuft insbesondere hauptsächlich in einer Haupterstreckungsrichtung. Unter der Haupterstreckungsrichtung des Aufzugschachts soll hier die Richtung verstanden werden, in der eine Aufzugkabine der fertig montierten Aufzuganlage verfahren wird. Die Haupterstreckungsrichtung verläuft also insbesondere vertikal und damit in z-Richtung, sie kann aber auch gegenüber der Vertikalen geneigt oder horizontal verlaufen. Die Haupterstreckungsrichtung muss dabei nicht zwingend über die gesamte Länge des Aufzugschachts entlang einer einzigen Gerade verlaufen. Es ist beispielsweise auch möglich, dass sich der Verlauf der Haupterstreckungsrichtung aus Geradenstücken zusammensetzt, deren Übergangsbereiche auch ausgerundet sein können.

Im Aufzugschacht ist ein insbesondere langgestrecktes Referenzelement angeordnet. Das Referenzelement ist insbesondere flexibel, beispielsweise als eine Schnur aus Kunststoff oder als ein Draht aus Metall ausgeführt. Es kann aber auch starr, beispielsweise als eine Kunststoff- oder Metallschiene ausgeführt sein. Beim Einbringen des Referenzelements in den Aufzugschacht wird es insbesondere im Aufzugschacht fixiert. Dadurch ist die Lage des Referenzelements bezüglich des Aufzugschachts und damit gegenüber Wänden des Aufzugschachts bekannt. Es ist also beispielsweise bekannt, welchen Abstand das Referenzelement zu den verschiedenen Schachtwänden des Aufzugschachts hat. Diese Informationen können bei der Bestimmung einer Montageposition von Schachtmaterial, beispielsweise von so genannten Schienenbügeln oder Führungsschienen verwendet werden. Das Referenzelement ist in der Haupterstreckungsrichtung des Aufzugschachts ausgerichtet, es verläuft also hauptsächlich in Haupterstreckungsrichtung und damit in vertikaler Richtung bzw. in z-Richtung.

Der erste Entfernungssensor ist insbesondere fest am Lokalisierungssystem angeordnet, wobei unter fest angeordnet zu verstehen ist, dass es ortsfest gegenüber dem Lokalisierungssystem und damit unbeweglich am Lokalisierungssystem angeordnet ist. Er ist insbesondere so ausgeführt, dass er den ersten Abstand beispielsweise in x- Richtung und den zweiten Abstand beispielsweise in y-Richtung zum ersten Referenzelement kontaktlos messen kann. Der Entfernungssensor ist erfindungsgemäss als ein 2D-Profil-Scanner ausgeführt. Mit einem 2D-Profil-Scanner kann das Profil eines vor dem 2D-Profil-Scanner liegenden, linienförmigen Mess-Bereichs bestimmt werden. Der 2D-Profil-Scanner wird insbesondere so angeordnet, dass der linienförmige Messbereich in y-Richtung verläuft und der 2D-Profil-Scanner das Profil in x-Richtung erfassen kann. Wenn der 2D-Profil-Scanner so gegenüber dem Referenzelement ausgerichtet ist, dass sich das Referenzelement im Mess-Bereich des 2D-Profil-Scanners befindet, kann die x- und y-

Position des 2D-Profil-Scanners und damit des Lokalisierungssystems bezüglich des Referenzelements bestimmt werden. Mit einem als 2D-Profil-Scanner ausgeführten ersten Entfernungssensor kann damit ein erster Abstand insbesondere in x-Richtung und ein zum ersten Abstand senkrechter, zweiter Abstand insbesondere in y-Richtung zum Referenzelement gemessen werden.

Der Neigungssensor ist ebenfalls insbesondere fest am Lokalisierungssystem angeordnet. Ein Neigungssensor kann die Neigung bzw. Rotation gegenüber der durch die Schwerkraft vorgegebenen vertikalen Achse bzw. z-Achse autark und damit ohne Nutzung anderer, externer Bauteile, also insbesondere unabhängig von dem oder den langgestreckten Referenzelementen messen. Neigungssensoren sind allgemein bekannt und in unterschiedlichsten Ausführungen auf dem Markt erhältlich. Sie können beispielsweise einen internen Pendelkörper aufweisen, dessen Lage elektronisch, induktiv, kapazitiv oder optisch gemessen wird. Das Lokalisierungssystem weist einen Neigungssensor auf, mittels welchem die Rotation um eine horizontal verlaufende erste Achse beispielsweise die x-Achse und eine horizontal verlaufende, zur ersten Achse senkrechten, zweiten Achse beispielsweise die y-Achse gemessen werden kann. Der Neigungssensor misst damit die Neigung des Lokalisierungssystems.

Um die Position des Lokalisierungssystems in Haupterstreckungsrichtung des Aufzugschachts also insbesondere in z-Richtung zu bestimmen, weist das Lokalisierungssystem ein weiteres Messsystem auf. Die Position des Lokalisierungssystems in Haupterstreckungsrichtung wird insbesondere ohne Nutzung des ersten Referenzelements bestimmt. Dazu kann beispielsweise ein Messsystem genutzt werden, das die Informationen auf einem im Aufzugschacht angeordneten und in Haupterstreckungsrichtung verlaufenden Magnetband oder einem Band mit optischen auswertbaren Informationen auswertet und daraus die Position in Haupterstreckungsrichtung bestimmt. Derartige Messsystem sind allgemein bekannt und auf dem Markt erhältlich. Das Lokalisierungssystem kann dabei beispielsweise ein Messsystem nutzen, mit Hilfe dessen im fertig installierten Zustand die Position einer Aufzugskabine in Haupterstreckungsrichtung bestimmt werden kann. Es ist auch möglich, dass ein Abstand zu einem Ende des Aufzugschachts oder zu einem Türausschnitt im Aufzugschacht mittels eines geeigneten Entfernungsmessgeräts, beispielsweise basierend auf einem Ultraschall- oder Lasermessverfahren bestimmt wird.

Darüber hinaus gibt es zahlreiche weitere Möglichkeiten, die Position des Lokalisierungssystems in Haupterstreckungsrichtung zu bestimmen.

In Ausgestaltung der Erfindung ist der erste Entfernungssensor so ausgeführt und angeordnet, dass er die Abstände zu zwei Referenzpunkten am ersten Referenzelement messen kann, wobei die beiden Referenzpunkte in einem definierten Verhältnis zueinander angeordnet sind. Damit ist zur Bestimmung der Position des Lokalisierungssystems nur ein Entfernungssensor und ein Referenzelement notwendig. Das Lokalisierungssystem ist damit besonders kostengünstig und der Aufwand für das Anbringen des Referenzelements im Aufzugschacht sehr gering.

Der Entfernungssensor misst für jeden der beiden Referenzpunkte einen ersten Abstand, also in x-Richtung und einen zweiten Abstand, also in y-Richtung. Die beiden Referenzpunkte sind in einem bekannten Verhältnis zueinander angeordnet. Die Referenzpunkte haben insbesondere einen bekannten Abstand in y-Richtung zueinander. Die beiden Referenzpunkte liegen beispielsweise auf verschiedenen Kanten eines als eine Schiene ausgeführten Referenzelements.

Aus den beiden genannten Abständen in x-Richtung und in y-Richtung kann die Steuerungseinrichtung des Lokalisierungssystems sowohl die Positionen des Lokalisierungssystems in x- und y-Richtung, als auch die Rotation um die vertikale Achse bzw. z-Achse bestimmen. Damit kann die Steuerungseinrichtung alle sechs Freiheitsgrade des Lokalisierungssystems bestimmen.

In Ausgestaltung der Erfindung ist der erste Entfernungssensor so ausgeführt und angeordnet, dass er einen dritten Abstand und einen zum dritten Abstand senkrechten, vierten Abstand zu einem zweiten Referenzelement messen kann, wobei das erste Referenzelement und das zweite Referenzelement in einem definierten Verhältnis zueinander angeordnet sind.

Das zweite Referenzelement ist insbesondere gleich wie das zweite Referenzelement ausgeführt und parallel zum ersten Referenzelement im Aufzugschacht und damit in einem definierten Verhältnis zueinander angeordnet. Die beiden Referenzelemente sind so angeordnet, dass der erste Entfernungssensor die genannten Entfernungen messen kann. Sie weisen beispielsweise nur einen vergleichsweise kleinen Abstand von mehreren Zentimetern zueinander auf.

In Ausgestaltung der Erfindung weist das Lokalisierungssystem einen zweiten Entfernungssensor auf, mittels welchem ein dritter Abstand und ein zum dritten Abstand senkrechter, vierter Abstand zu einem zweiten Referenzelement gemessen werden kann, wobei das erste Referenzelement und das zweite Referenzelement in einem definierten Verhältnis zueinander angeordnet sind. Damit kann eine besonders genaue Bestimmung der Position des Lokalisierungssystems ermöglicht werden.

Der zweite Entfernungssensor ist insbesondere gleich wie der erste Entfernungssensor ausgeführt und insbesondere so angeordnet, dass ihre linienförmigen Messbereiche auf einer gemeinsamen Geraden liegen. Damit sind die Ausrichtungen des ersten und dritten Abstands, sowie des zweiten und vierten Abstands gleich. Mit den vier genannten Abständen kann die Steuerungseinrichtung sowohl die Positionen des Lokalisierungssystems in x- und y-Richtung, als auch die Rotation um die vertikale Achse bzw. z-Achse bestimmen. Damit kann die Steuerungseinrichtung alle sechs Freiheitsgrade des Lokalisierungssystems bestimmen.

Das zweite Referenzelement ist insbesondere gleich wie das zweite Referenzelement ausgeführt und parallel zum ersten Referenzelement im Aufzugschacht angeordnet. Die beiden Referenzelemente sind damit in einem definierten Verhältnis zueinander angeordnet.

Ein erfindungsgemässes Lokalisierungssystem ist besonders vorteilhaft an einer Montagevorrichtung zur Durchführung eines Installationsvorgangs in einem Aufzugschacht einer Aufzuganlage angeordnet. Um Montageschritte eines Installationsvorgangs in einem Aufzugschacht durchführen zu können, muss die Montagevorrichtung ihre Position im Aufzugschacht kennen. Dies ist mit einem, insbesondere fest an der Montageeinrichtung angeordneten Lokalisierungssystem besonders schnell und auch während einer Verlagerung der Montagevorrichtung im Aufzugschacht möglich.

Die einzelnen Elemente des Lokalisierungssystems wie Entfernungssensor, Neigungssensor, Messsystem zur Bestimmung der Position in Haupterstreckungsrichtung und Steuerungseinrichtung können an der Montagevorrichtung verteilt angeordnet sein. Sie müssen also keine Baueinheit bilden, die beispielsweise in einem gemeinsamen Gehäuse angeordnet ist. Es ist auch möglich, dass eine Steuerungseinrichtung gleichzeitig als Steuerungseinrichtung des Lokalisierungssystems und der Montagevorrichtung dient.

Die Montagevorrichtung weist insbesondere eine Trägerkomponente und eine Installationskomponente auf. Die Trägerkomponente ist dazu ausgelegt, relativ zum Aufzugschacht verlagert und in verschiedenen Höhen innerhalb des Aufzugschachts positioniert zu werden. Die Installationskomponente ist an der Trägerkomponente gehalten und dazu ausgelegt, einen Montageschritt im Rahmen des Installationsvorgangs zumindest teilautomatisch auszuführen. Das Lokalisierungssystem ist an der Trägerkomponente angeordnet.

Die Trägerkomponente der Montagevorrichtung kann in unterschiedlicher Weise ausgestaltet sein. Beispielsweise kann die Trägerkomponente als einfache Plattform, Gestell, Gerüst, Kabine oder Ähnliches ausgebildet sein.

Die Installationskomponente der Montagevorrichtung soll mechatronisch sein, das heisst, sie soll zusammenwirkende mechanische, elektronische und informationstechnische Elemente oder Module aufweisen.

Beispielsweise kann die Installationskomponente eine geeignete Mechanik aufweisen, um beispielsweise innerhalb eines Montageschritts Werkzeuge handhaben zu können. Die Werkzeuge können dabei von der Mechanik beispielsweise geeignet an die Montageposition gebracht werden und/oder während eines Montageschrittes geeignet geführt werden. Alternativ kann die Installationskomponente auch selbst über eine geeignete Mechanik verfügen, die ein Werkzeug ausbildet. Das genannte Werkzeug kann beispielsweise als ein Bohrer oder ein Schrauber ausgeführt sein.

Elektronische Elemente oder Module der mechatronischen Installationskomponente können beispielsweise dazu dienen, mechanische Elemente oder Module der Installationskomponente geeignet anzusteuern oder zu kontrollieren. Solche elektronischen Elemente oder Module können somit beispielsweise als Steuerungseinrichtung der Installationskomponente dienen. Es können auch noch weitere Steuerungseinrichtungen vorgesehen sein, die untereinander Informationen austauschen, Steuerungsaufgaben aufteilen und/oder sich gegenseitig überwachen. Wenn im Folgenden von einer Steuerungseinrichtung gesprochen wird, wird dabei auf eine oder mehrere dieser Steuerungseinrichtungen Bezug genommen.

Ferner kann die Installationskomponente über informationstechnische Elemente oder Module verfügen, mit Hilfe derer beispielsweise abgeleitet werden kann, an welche Position ein Werkzeug gebracht und/oder wie das Werkzeug dort während eines Montageschrittes betätigt und/oder geführt werden soll.

Eine Interaktion zwischen den mechanischen, elektronischen und informationstechnischen Elementen oder Modulen findet dabei insbesondere derart statt, dass im Rahmen des Installationsvorgangs zumindest ein Montageschritt teilautomatisch oder vollautomatisch von der Montagevorrichtung durchgeführt werden kann.

Zum Verlagern der Montagevorrichtung innerhalb des Aufzugschachts ist insbesondere eine Verlagerungskomponente vorgesehen. Beispielsweise kann als Verlagerungskomponente ein im Aufzugschacht vormontierter Antrieb vorgesehen werden. Die Verlagerungskomponente kann in unterschiedlicher Weise ausgeführt sein, um in der Lage zu sein, die Montagevorrichtung innerhalb des Aufzugschachts verfahren zu können.

Beispielsweise kann die Verlagerungskomponente an einer Haltestelle oben innerhalb des Aufzugschachts fixiert sein und ein auf Zug belastbares, biegbares Tragmittel wie beispielsweise ein Seil, eine Kette oder einen Riemen aufweisen, dessen eines Ende an der Verlagerungskomponente gehalten ist und dessen anderes Ende an der Trägerkomponente der Montagevorrichtung, fixiert ist.

Die Montagevorrichtung kann insbesondere gegenüber Schachtwänden des Aufzugschachts fixiert und damit in eine Fixierungsposition gebracht werden. **In** der Fixierposition wird verhindert, dass sich die Trägerkomponente der Montagevorrichtung während eines Montageschrittes, bei dem die Installationskomponente arbeitet und beispielsweise Querkräfte auf die Trägerkomponente ausübt, in einer Richtung quer zur Haupterstreckungsrichtung innerhalb des Aufzugschachts bewegen kann. Die Montagevorrichtung kann dazu insbesondere eine Fixierkomponente aufweisen, welche beispielsweise dazu ausgelegt sein kann, sich seitlich an den Schachtwänden des Aufzugschachts abzustützen oder zu verstemmen, so dass sich die Trägerkomponente nicht mehr in horizontaler Richtung relativ zu den Schachtwänden bewegen kann. Hierzu kann die Fixierkomponente beispielsweise über geeignete Stützen, Stempel, Hebel oder Ähnliches verfügen.

Die Lage der Montagevorrichtung wird insbesondere in der Fixierungsposition bestimmt, bevor ein Montageschritt von der Montagevorrichtung ausgeführt wird.

Die Montagevorrichtung kann insbesondere einen weiteren Sensor aufweisen, welcher an der Installationskomponente angeordnet werden kann und mittels welchem ein Abstand zu einem ersten Referenzelement gemessen werden kann. Eine Steuerungseinrichtung der Montagevorrichtung ist dann dazu vorgesehen, eine relative Lage der Montagevorrichtung in einer Fixierungsposition bezüglich des ersten langgestreckten Referenzelements im Aufzugschacht unter Nutzung des an der Installationskomponente angeordneten Sensors zu bestimmen. Die Steuerungseinrichtung bestimmt die relative Lage des ersten Referenzelements bezüglich mindestens zwei unterschiedlicher Sensorpositionen und damit Positionen der Installationskomponente. In Abhängigkeit der relativen Lage der Montagevorrichtung bezüglich des ersten Referenzelements bestimmt sie dann die Fixierungsposition im Aufzugschacht.

Ein Sensor, der an der Installationskomponente angeordnet werden kann und mittels welchem Entfernungen gemessen werden können, ist insbesondere nicht nur für die Bestimmung der Position der Montageeinrichtung im Aufzugschacht einsetzbar. Mit Hilfe eines derartigen Sensors kann beispielsweise der Verlauf einer Schachtwand des Aufzugschachts bestimmt werden.

Aus Zeitgründen soll die Position der Montagevorrichtung im Aufzugschacht mittels des erfindungsgemässen Verfahren durchgeführt werden. Um dennoch Messwerte eines an der Installationskomponente angeordneten Sensors sinnvoll verwenden zu können, müssen die beiden Verfahren zur Bestimmung der Position der Montageeinrichtung aufeinander abgestimmt werden. Dazu wird an insbesondere drei verschiedenen Positionen der Montagevorrichtung im Aufzugschacht mit beiden Verfahren eine Bestimmung der Position der Montagevorrichtung bestimmt. Aus dem Vergleich der Ergebnisse an den verschiedenen Positionen können die Verfahren aufeinander abgestimmt werden.

Die oben genannte Aufgabe wird auch durch ein Verfahren zur Bestimmung einer aktuellen Position eines Lokalisierungssystems in einem sich in einer Haupterstreckungsrichtung erstreckenden Aufzugschacht einer Aufzuganlage gelöst, das wenigstens folgende Schritte aufweist:
- Einbringen eines ersten langgestreckten Referenzelements in den Aufzugschacht, welches in einer Haupterstreckungsrichtung des Aufzugschachts ausgerichtet ist,
- Messen eines ersten Abstands und eines zum ersten Abstand senkrechten, zweiten Abstands zu einem ersten Referenzelement mit einem ersten Entfernungssensor,
- Messen einer Rotation des Lokalisierungssystems um eine horizontal verlaufende erste Achse und eine horizontal verlaufende, zur ersten Achse senkrechten, zweiten Achse,
- Bestimmung einer Position des Lokalisierungssystems in Haupterstreckungsrichtung des Aufzugschachts und
- Bestimmen der aktuellen Position des Lokalisierungssystems auf Basis des genannten ersten Abstands, des genannten zweiten Abstands, der genannten Rotation und der genannten Position in Haupterstreckungsrichtung des Aufzugschachts.
Der erste Entfernungssensor ist dabei erfindungsgemäss als ein 2D-Profil-Scanner ausgeführt.

In Ausgestaltung der Erfindung werden mittels des ersten Entfernungssensors die Abstände zu zwei Referenzpunkten am ersten Referenzelement gemessen, wobei die Lokalisierungssystems verwendet werden.

In Ausgestaltung der Erfindung wird mittels des ersten Entfernungssensors ein dritter Abstand und ein zum dritten Abstand senkrechter, vierter Abstand zu einem zweiten Referenzelement gemessen, wobei das erste Referenzelement und das zweite Referenzelement in einem definierten Verhältnis zueinander angeordnet sind.

In Ausgestaltung der Erfindung wird mittels eines zweiten Entfernungssensors ein dritter Abstand und ein zum dritten Abstand senkrechter, vierter Abstand zu einem zweiten Referenzelement gemessen. Der genannte dritte Abstand und der genannte vierte Abstand werden zur Bestimmung der aktuellen Position des Lokalisierungssystems verwendet, wobei das erste Referenzelement und das zweite Referenzelement in einem definierten Verhältnis zueinander angeordnet sind.

In Ausgestaltung der Erfindung wird eine erste gemeinsame Montageplatte im Aufzugschacht befestigt, an welcher erste Enden des ersten und zweiten Referenzelements befestigt sind. Damit kann besonders einfach ein definierter Abstand der beiden ersten Enden der Referenzelemente zueinander festgelegt und eingehalten werden. Ausserdem können durch die Befestigung der Montageplatte die beiden ersten Enden der Referenzelemente besonders einfach im Aufzugschacht fixiert werden.

Insbesondere wird eine zweite gemeinsame Montageplatte ebenfalls im Aufzugschacht befestigt, an welcher zweite Enden des ersten und zweiten Referenzelements befestigt sind. Die beiden Referenzelemente haben insbesondere an beiden Montageplatten den selben Abstand zueinander, so dass dadurch besonders einfach gewährleistet ist, dass beiden Referenzelemente über ihre gesamte Länge parallel zueinander verlaufen.

Die erste Montageplatte kann beispielsweise am Boden eines untersten Türausschnitts des Aufzugschachts und die zweiten Montageplatte beispielsweise am Boden oder an der Decke eines obersten Türausschnitts befestigt werden. Damit kann auf einfache Weise erreicht werden, dass die Referenzelemente durch den gesamten für die Montagevorrichtung wichtigen Teil des Aufzugschachts verlaufen. Die Montage an den Türauschnitten ist auch besonders einfach und ungefährlich, da man hierzu nicht in den Aufzugschacht einsteigen muss, sondern die Montage vom Boden der den Türausschnitten zugeordneten Etagen möglich ist.

In Ausgestaltung der Erfindung wird das erste und/oder zweite Referenzelement zwischen seinen Enden zur Verminderung von Schwingungen gegenüber dem Aufzugschacht fixiert. Insbesondere in hohen Aufzugsschächten und damit langen Referenzelementen kann die Gefahr bestehen, dass die Referenzelemente zu Schwingungen angeregt werden, was die Bestimmung der Fixierungsposition der Montagevorrichtung ungenau machen kann. Durch eine oder mehrere Fixierungen des Referenzelements zwischen seinen beiden Enden, beispielsweise gegenüber einer Schachtwand des Aufzugschachts können derartige Schwingung verhindert oder zumindest vermindert werden. Damit wird eine besonders genaue Bestimmung der Fixierungsposition, insbesondere auch in hohen Aufzugschächten ermöglicht.

Ein nicht unter die Patentansprüche fallendes Lokalisierungssystem kann auch ohne einen Neigungssensor ausgeführt sein. Ein derartiges Lokalisierungssystem kann beispielsweise zwei Entfernungssensoren aufweisen, die in Vertikalrichtung bzw. z-Richtung zueinander beabstandet angeordnet sind, wobei jeder Entfernungssensor jeweils zwei Abstände zu zwei Referenzpunkten an einem Referenzelement messen kann. In einer weiteren Ausführung eines derartigen Lokalisierungssystems kann das Lokalisierungssystem drei Entfernungssensoren aufweisen, die in Vertikalrichtung bzw. z-Richtung und in horizontaler Richtung, beispielsweise in y-Richtung zueinander beabstandet angeordnet sind. Zwei Entfernungssensoren messen in diesem Fall die Abstände zu einem ersten Referenzelement und der dritte Entfernungssensor die Abstände zu einem zweiten Referenzelement.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1: ein Lokalisierungssystem in einer Sicht von oben,
- Fig. 2: das Lokalisierungssystem aus Fig. 1 in einer Draufsicht,
- Fig. 3: ein alternatives Lokalisierungssystem in einer Sicht von oben,
- Fig. 4: eine perspektivische Ansicht eines Aufzugschachts einer Aufzuganlage mit einer darin aufgenommenen Montagevorrichtung und
- Fig. 5: eine perspektivische Ansicht einer Montagevorrichtung.

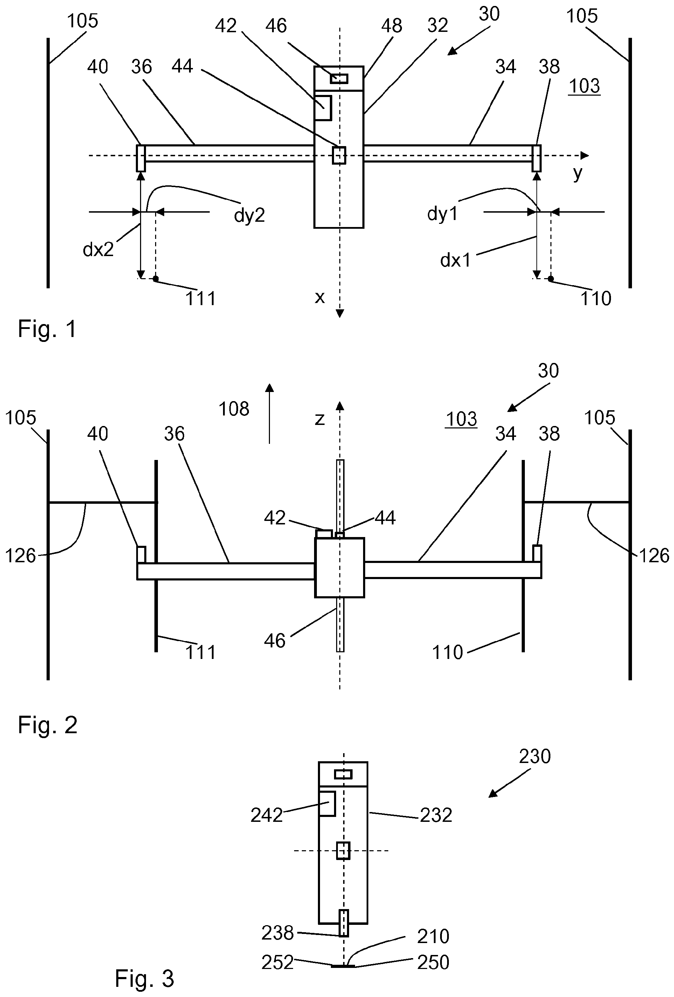

Zum besseren Verständnis ist in den Fig. 1 und 2 ein orthogonales Koordinatensystem mit einer x-, y- und z-Achse dargestellt, welche jeweils senkrecht zueinander sind. Die x- und y-Achsen verlaufen horizontal und die z-Achse vertikal.

Gemäss Fig. 1 und 2 verfügt ein Lokalisierungssystem 30 zur Bestimmung einer aktuellen Position in einem durch Schachtwände 105 begrenzten Aufzugschacht 103 einer Aufzuganlage über einen hauptsächlich quaderförmigen Grundkörper 32, an dem an zwei gegenüberliegenden Seiten ein in den Fig. 1 und 2 nach rechts auskragender, erster Auslieger 34 und ein in den Fig. 1 und 2 nach links auskragender, zweiter Auslieger 36 angeordnet sind. Die Auslieger 34, 36 verlaufen damit in y-Richtung. An den dem Grundkörper 32 abgewandten Enden der Auslieger 34, 36 ist am rechten Auslieger 34 ein erster Entfernungssensor 38 und am linken Auslieger 36 ein zweiter Entfernungssensor 40 angeordnet, welche in x-Richtung orientiert sind. Die beiden Entfernungssensoren 38, 40 sind als 2D-Profilscanner ausgeführt.

Im Aufzugschacht 103 sind ein erstes langgestrecktes Referenzelement 110 und ein zweites langgestrecktes Referenzelement 111 in Form von Schnüren angeordnet. Die Referenzelemente 110, 111 verlaufen in vertikal im Aufzugschacht 103 und damit in einer Haupterstreckungsrichtung 108 und in z-Richtung. Die Referenzelemente 110, 111 sind mit jeweils einer stabförmigen Fixierung 126, welche aus Übersichtlichkeitsgründen nur in der Fig. 2 dargestellt ist, an jeweils einer Schachtwand 105 des Aufzugschachts 103 fixiert.

Der erste Entfernungssensor 38 ist so angeordnet, dass er einen ersten Abstand dx1 in x-Richtung und einen zweiten Abstand dy1 in y-Richtung zum ersten Referenzelement 110 messen kann. Der zweite Entfernungssensor 40 ist so angeordnet, dass er einen dritten Abstand dx2 in x-Richtung und einen vierten Abstand dy2 in y-Richtung zum zweiten Referenzelement 111 messen kann. Die gemessenen Abstände dx1, dy1, dx2, dy2 werden von den Entfernungsensoren 38, 40 an eine Steuerungseinrichtung 42 weitergeleitet, welche sie auswertet.

Die Steuerungseinrichtung 42 bestimmt aus den Abständen dx1, dy1, dx2, dy2 die Positionen der Lokalisierungseinrichtung 30 gegenüber den Referenzelementen 110, 111 in x- und y-Richtung. Da die Referenzelemente 110, 111 an definierten bekannten Positionen im Aufzugschacht 103 angeordnet wurden, ist damit auch die Position des Lokalisierungssystems 30 in x- und y- Richtung im Aufzugschacht 103 bekannt. Die Steuerungseinrichtung 42 bestimmt aus den Abständen dx1, dy1, dx2, dy2 ausserdem die Rotation der Lokalisierungseinrichtung 30 um die z-Achse, also den so genannten Gierwinkel. Im dargestellten Bespiel sind die Abstände der beiden Referenzelemente 110, 111 zu den beiden Entfernungssensoren 38, 40 jeweils gleich, so dass keine Rotation um die z-Achse vorliegt, der Gierwinkel damit 0 ist.

Am Grundkörper 32 des Lokalisierungssystems 30 ist ausserdem ein Neigungssensor 44 angeordnet. Der Neigungssensor 44 misst die Rotationen des Grundkörpers 32 und damit des Lokalisierungssystems 30 um die x- und y-Achse und leitet die gemessenen Rotationen an die Steuerungseinrichtung 42 weiter. Die Rotation um die x-Achse entspricht dem so genannten Rollwinkel und die Rotation um die y-Achse dem so genannten Nickwinkel. Im dargestellten Beispiel weist das Lokalisierungssystem 30 weder eine Rotation um die x-Achse, noch um die y-Achse auf, so dass der Rollwinkel und der Nickwinkel jeweils 0 sind.

Zur Bestimmung der Position des Lokalisierungssystems 30 in z-Richtung und damit in Haupterstreckungsrichtung 108 des Aufzugschachts 103 ist im Aufzugschacht 103 ein in z-Richtung verlaufendes Magnetband 46 angeordnet. Das Magnetband 46 enthält in codierter Form eine Höheninformation, also eine Information über die Position in z-Richtung. Um diese Höheninformation vom Magnetband 46 auslesen zu können, ist am Grundkörper 32 ein Messsystem 48 angeordnet, durch welches das Magnetband 46 hindurchgeführt wird. Das Messsystem 48 bestimmt damit die Position des Grundkörpers 32 und damit des Lokalisierungssystems 30 in Haupterstreckungsrichtung 108 des Aufzugschachts 103 und leitet diese Information an die Steuerungseinrichtung 42 weiter.

Aus den gemessenen Werten der beiden Entfernungssensoren 38, 40, des Neigungssensors 44 und des Messsystems 48 bestimmt die Steuerungseinrichtung 42 damit die x-, y- und z-Position, sowie die Rotationen um die x-, y- und z-Achsen des Lokalisierungssystems 30.

Um die aktuelle Position des Lokalisierungssystems 30 im Aufzugschacht 103 zu bestimmen, werden also zuerst die beiden Referenzelemente 110, 111 in den Aufzugschacht eingebracht, dann mit den Entfernungssensoren 38, 40 die genannten Abstände zu den Referenzelementen 110, 111, mit dem Neigungssensor 44 die genannten Rotationen gemessen, sowie mit dem Messsystem 48 die Position des Lokalisierungssystems 30 in Haupterstreckungsrichtung 108 des Aufzugschachts 103 bestimmt. Die Steuerungseinrichtung 42 bestimmt dann auf Basis dieser Informationen die Position des Lokalisierungssystems 30 im Aufzugschacht 103.

Ein in der Fig. 3 dargestelltes Lokalisierungssystem 230 ist sehr ähnlich wie das Lokalisierungssystem 30 aus den Fig. 1 und 2 aufgebaut, weshalb nur auf die Unterschiede zum Lokalisierungssystem 30 aus den Fig. 1 und 2 eingegangen wird.

Das Lokalisierungssystem 230 weist nur einen einzigen Entfernungssensor 238 auf, der direkt am Grundkörper 232 des Lokalisierungssystems 230 angeordnet ist. Der Entfernungssensor 238 ist auf nur ein einziges Referenzelement 210 im Aufzugschacht 103 ausgerichtet. Das Referenzelement 210 ist als eine Schiene ausgeführt, die in Haupterstreckungsrichtung 108 des Aufzugschachts 103 verläuft. Der Entfernungssensor 238 misst jeweils zwei Entfernungen zu zwei Referenzpunkten 250, 252, welche an gegenüberliegenden Kanten des Referenzelements 210 befinden und damit in einem definierten Verhältnis zueinander angeordnet sind. Aus den gemessenen Entfernungen kann die Steuerungseinrichtung 242 wie oben beschrieben die Position des Lokalisierungssystems 230 in x- und y- Richtung, sowie den Gierwinkel bestimmen.

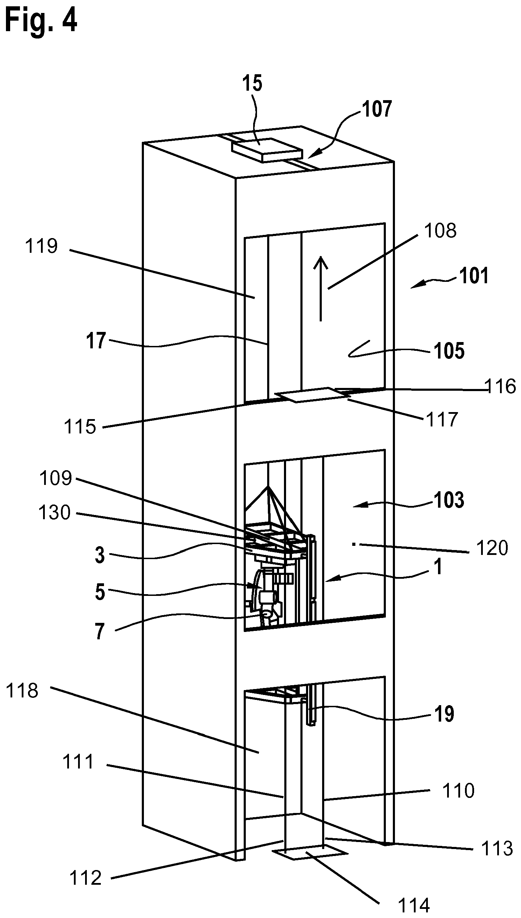

Statt des als Schiene ausgeführten einzigen Referenzelements können auch zwei Referenzelemente in Form von Schnüren im Aufzugschacht angeordnet werden, welche entlang der Kanten der in Fig. 4 dargestellten Schiene verlaufen. Die Bestimmung der Position des Lokalisierungssystems erfolgt dann auf analoge Weise wie bei Verwendung einer Schiene.

Fig. 4 zeigt eine Montagevorrichtung 1 mit einem Lokalisierungssystem 130 in einem Aufzugschacht 103 einer Aufzuganlage 101. Die Montagevorrichtung 1 weist eine Trägerkomponente 3 und eine mechatronische Installationskomponente 5 auf. Die Trägerkomponente 3 ist als Gestell ausgeführt, an dem die mechatronische Installationskomponente 5 montiert ist. Dieses Gestell weist Abmessungen auf, die ermöglichen, die Trägerkomponente 3 innerhalb des Aufzugschachts 103 in einer Haupterstreckungsrichtung 108 des Aufzugschachts 103 und damit in diesem Fall vertikal zu verlagern, das heisst beispielsweise zu unterschiedlichen vertikalen Positionen an verschiedenen Stockwerken innerhalb eines Gebäudes zu verfahren. Die mechatronische Installationskomponente 5 ist im dargestellten Beispiel als Industrieroboter 7 ausgeführt, der nach unten hängend über eine Haltevorrichtung 109 an dem Gestell der Trägerkomponente 3 angebracht ist. Ein Arm des Industrieroboters 7 kann dabei relativ zu der Trägerkomponente 3 bewegt werden und beispielsweise hin zu einer Wand 105 des Aufzugschachts 103 verlagert werden.

Die Trägerkomponente 3 ist über ein als Tragmittel 17 dienendes Stahlseil mit einer Verlagerungskomponente 15 in Form einer motorisch angetriebenen Seilwinde verbunden, welche oben an dem Aufzugschacht 103 an einer Haltestelle 107 an der Decke des Aufzugschachts 103 angebracht ist. Mithilfe der Verlagerungskomponente 15 kann die Montagevorrichtung 1 innerhalb des Aufzugschachts 103 entlang der Haupterstreckungsrichtung 108, also vertikal über eine gesamte Länge des Aufzugschachts 103 hin verlagert werden.

Die Montagevorrichtung 1 weist ferner eine Fixierkomponente 19 auf, mithilfe derer die Trägerkomponente 3 innerhalb des Aufzugschachts 103 in seitlicher Richtung, das heisst in horizontaler Richtung, fixiert werden kann. Die Trägerkomponente 3 wird damit in eine Fixierungsposition gebracht, in der die Trägerkomponente 3 in der Fig. 4 dargestellt ist. Die Fixierkomponente 19 an der Vorderseite der Trägerkomponente 3 und/oder Stempel (nicht dargestellt) an einer Rückseite der Trägerkomponente 3 können hierzu vorne bzw. hinten nach aussen verlagert werden und auf diese Weise die Trägerkomponente 3 zwischen Wänden 105 des Aufzugschachts 103 verstemmen. Die Fixierkomponente 19 und/oder die Stempel können dabei beispielsweise mithilfe einer Hydraulik oder Ähnlichem nach aussen verspreizt werden, um die Trägerkomponente 3 in dem Aufzugschacht 103 in horizontaler Richtung zu fixieren.

Innerhalb des Aufzugschachts 103 verlaufen zwei langesteckte Referenzelemente 110 und 111 in Form von Schnüren, die vor dem Einbringen der Montagevorrichtung 1 in den Aufzugschacht 103 eingebracht werden. Erste, untere Enden 112, 113 der Referenzelemente 110, 111 sind an einer ersten, unteren Montagplatte 114 und zweite, obere Enden 115, 116 der Referenzelemente 110, 111 sind an einer zweiten, oberen Montagplatte 117 befestigt. Die beiden Referenzelemente 110, 111 weisen an beiden Montageplatten 114, 117 den gleichen Abstand auf, so dass sie parallel zueinander verlaufen. Die untere Montageplatte 114 ist am Boden eines untersten Türausschnitts 118 und die obere Montageplatte 117 am Boden eines obersten Türausschnitts 119 so befestigt, dass die Referenzelemente 110, 111 in Haupterstreckungsrichtung 108 innerhalb des Aufzugschachts 103 verlaufen. Damit ist auch die Lage der Referenzelemente 110, 111 gegenüber den Wänden 105 des Aufzugschachts 103 bekannt.

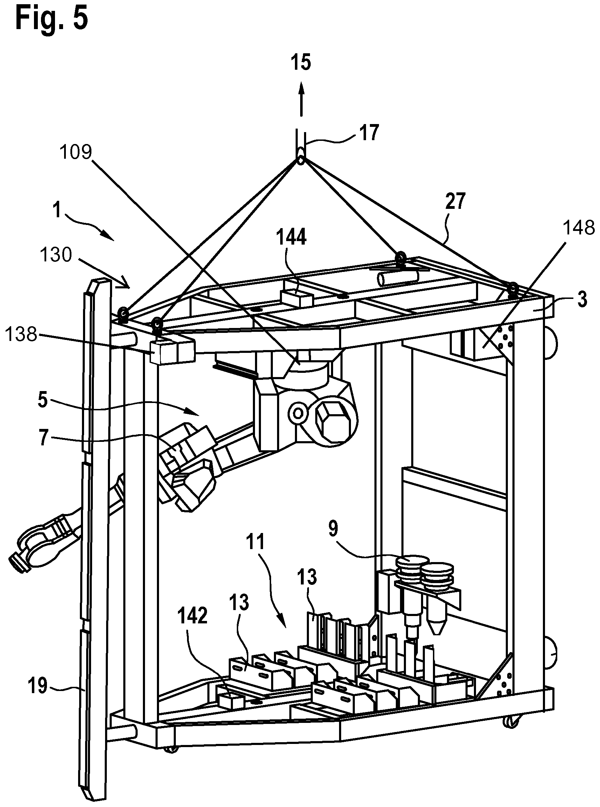

Fig. 5 zeigt eine vergrösserte Ansicht einer Montagevorrichtung 1 gemäss einer Ausführungsform der vorliegenden Erfindung.

Die Trägerkomponente 3 ist als käfigartiges Gestell ausgebildet, bei dem mehrere horizontal und vertikal verlaufende Holme eine mechanisch belastbare Struktur bilden.

Oben an der käfigartigen Trägerkomponente 3 sind Halteseile 27 angebracht, welche mit dem Tragmittel 17 verbunden werden können. Durch ein Verlagern des Tragmittels 17 innerhalb des Aufzugschachts 103, das heisst beispielsweise durch Auf- bzw. Abwickeln des biegbaren Tragmittels 17 auf die Seilwinde der Verlagerungskomponente 15, kann somit die Trägerkomponente 3 hängend innerhalb des Aufzugschachts 103 in der Haupterstreckungsrichtung 108 und damit vertikal verlagert werden.

Seitlich an der Trägerkomponente 3 ist die Fixierkomponente 19 vorgesehen. Im dargestellten Beispiel ist die Fixierkomponente 19 mit einem in vertikaler Richtung verlaufenden länglichen Holm ausgebildet, der in horizontaler Richtung mit Bezug auf das Gestell der Trägerkomponente 3 verlagert werden kann. Der Holm kann hierzu beispielsweise über einen blockierbaren Hydraulikzylinder oder eine selbstsperrende Motorspindel an der Trägerkomponente 3 angebracht sein. Wenn der Holm der Fixierkomponente 19 weg von dem Gestell der Trägerkomponente 3 verlagert wird, bewegt er sich seitlich hin zu einer der Wände 105 des Aufzugschachts 103. Alternativ oder ergänzend könnten an der Rückseite der Trägerkomponente 3 Stempel nach hinten verlagert werden, um die Trägerkomponente 3 in dem Aufzugschacht 103 zu verspreizen. Auf diese Weise kann die Trägerkomponente 3 innerhalb des Aufzugschachts 103 verstemmt werden und so beispielsweise während einer Durchführung eines Montageschritts die Trägerkomponente 3 innerhalb des Aufzugschachts 103 in seitlicher Richtung und damit in der Fixierungsposition fixieren. Kräfte, die auf die Trägerkomponente 3 eingeleitet werden, können in diesem Zustand auf die Wände 105 des Aufzugschachts 103 übertragen werden, vorzugsweise ohne dass sich die Trägerkomponente 3 dabei innerhalb des Aufzugschachts 103 verlagern kann oder in Vibrationen gerät.

In der dargestellten Ausführungsform ist die mechatronische Installationskomponente 5 mithilfe eines Industrieroboters 7 ausgeführt. Es wird darauf hingewiesen, dass die mechatronische Installationskomponente 5 jedoch auch auf andere Weise realisiert werden kann, beispielsweise mit anders ausgebildeten Aktuatoren, Manipulatoren, Effektoren etc. Insbesondere könnte die Installationskomponente eine speziell für den Einsatz bei einem Installationsvorgang innerhalb eines Aufzugschachts 103 einer Aufzuganlage 1 adaptierte Mechatronik oder Robotik aufweisen.

In dem dargestellten Beispiel ist der Industrieroboter 7 mit mehreren um Schwenkachsen verschwenkbaren Roboterarmen ausgestattet. Beispielsweise kann der Industrieroboter mindestens sechs Freiheitsgrade aufweisen, das heisst, ein von dem Industrieroboter 7 geführtes Montagewerkzeug 9 kann mit sechs Freiheitsgraden bewegt werden, das heisst beispielsweise mit drei Rotationsfreiheitsgraden und drei Translationsfreiheitsgraden. Beispielsweise kann der Industrieroboter als Vertikal-Knickarmroboter, als Horizontal-Knickarmroboter oder als SCARA-Roboter oder als kartesischer Roboter bzw. Portalroboter ausgeführt sein.

Der Roboter kann an seinem freitragenden Ende mit verschiedenen Montagewerkzeugen oder Sensoren 9 gekoppelt werden. Die Montagewerkzeuge oder Sensoren 9 können sich hinsichtlich ihrer Auslegung und ihres Einsatzzweckes unterscheiden. Die Montagewerkzeuge oder Sensoren 9 können an der Trägerkomponente 3 derart gehalten werden, dass das freitragende Ende des Industrieroboters 7 an sie herangefahren werden und mit einem von ihnen gekoppelt werden kann.

Ein Sensor 9 kann als ein Laser-Scanner ausgeführt sein, mittels welchem eine Entfernung zu einem Bauteil, wie beispielsweise den Referenzelementen 110, 111 oder einer Schachtwand 105 gemessen werden kann. Der Industrieroboter 7 kann mit einem derartigen Sensor 9 gekoppelt werden. Zur Bestimmung der Position der Trägerkomponente 3 und damit der Montagevorrichtung 1 kann der Sensor 9 insbesondere in mindestens zwei verschiedene Positionen gegenüber den Referenzelementen 110, 111 gebracht werden.

Eines der Montagewerkzeuge 9 kann als Bohrwerkzeug, ähnlich einer Bohrmaschine, ausgestaltet sein. Durch Kopplung des Industrieroboters 7 mit einem solchen Bohrwerkzeug kann die Installationskomponente 5 dazu ausgestaltet werden, ein zumindest teilweise automatisiert gesteuertes Bohren von Löchern beispielsweise in eine der Wände 105 des Aufzugschachts 103 zu ermöglichen. Das Bohrwerkzeug kann hierbei von dem Industrieroboter 7 beispielsweise derart bewegt und gehandhabt werden, dass das Bohrwerkzeug mit einem Bohrer an einer vorgesehenen Position, einer Montageposition 120 in Fig. 4 Löcher beispielsweise in Beton der Wand 105 des Aufzugschachts 103 bohrt, in die später beispielsweise Befestigungsschrauben zur Fixierung von Befestigungselementen eingeschraubt werden können.

An der Trägerkomponente 3 kann ferner eine Magazinkomponente 11 vorgesehen sein. Die Magazinkomponente 11 kann dazu dienen, zu installierende Bauteile 13 zu lagern und der Installationskomponente 5 bereitzustellen.

Um die Position der Trägerkomponente 3 der Montagevorrichtung 1 innerhalb des Aufzugschachts 103 ermitteln zu können, weist die Montagevorrichtung 1 ein Lokalisierungssystem 130 auf. Das Lokalisierungssystem 130 ist nicht als eine Baueinheit ausgeführt, sondern die einzelnen Elemente des Lokalisierungssystems 130 sind verteilt an der Trägerkomponente 3 angeordnet.

Oben an der Trägerkomponente 3 und in Richtung Fixierkomponente 19 orientiert sind zwei Entfernungssensoren angeordnet, wobei nur ein erster Entfernungssensor 138 in der Fig. 5 zu sehen ist. Mittels der Entfernungssensoren können jeweils zwei Abstände zu den Referenzelementen 110, 111 gemessen werden.

Oberhalb der Haltevorrichtung 109 des Industrieroboters 7 ist ein Neigungssensor 144 angeordnet, mittels welchem die Neigung der Trägerkomponente 3 gegenüber der Vertikalen gemessen werden kann. Ausserdem ist an der dem Fixierungselement 19 abgewandten Seite der Trägerkomponente 3 ein Messsystem 148 angeordnet, welches eine Höheninformation eines in den Fig. 4 und 5 nicht dargestellten Magnetbands ausgelesen und damit die Position der Trägerkomponente 3 in Haupterstreckungsrichtung 108 des Aufzugschachts 103 bestimmen kann.

Die Informationen der Entfernungssensoren 138, des Neigungssensors 144 und des Messsystems 148 werden von einer Steuerungseinrichtung 142 ausgewertet. Die Steuerungseinrichtung 142 bestimmt wie oben beschrieben die Position der Trägerkomponente 3 im Aufzugschacht 103.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Lokalisierungssystem zur Bestimmung einer aktuellen Position in einem sich in einer Haupterstreckungsrichtung (108) erstreckenden Aufzugschacht (103) einer Aufzuganlage (101), wobei das Lokalisierungssystem (30, 130, 230) umfasst:
- einen ersten Entfernungssensor (38, 138, 238), mittels welchem ein erster Abstand und ein zum ersten Abstand senkrechter, zweiter Abstand zu einem ersten Referenzelement (110, 210) gemessen werden kann,
- einen Neigungssensor (44, 144), mittels welchem eine Rotation um eine horizontal verlaufende erste Achse (x) und eine horizontal verlaufende, zur ersten Achse senkrechten, zweiten Achse (y) gemessen werden kann und
- ein Messsystem (48, 148), mittels welchem eine Position des Lokalisierungssystems (30, 130, 230) in Haupterstreckungsrichtung (108) des Aufzugschachts (103) bestimmt werden kann,
wobei der erste Entfernungssensor (38, 138, 238) bei der Messung des ersten Abstands und des zweiten Abstands an einer festen Position gegenüber dem ersten Referenzelement (110, 210) bleibt,
**dadurch gekennzeichnet, dass**
der erste Entfernungssensor (38, 138, 238) als ein 2D-Profil-Scanner ausgeführt ist.

2. Lokalisierungssystem nach Anspruch 1,
**dadurch gekennzeichnet, dass**
der erste Entfernungssensor (238) so ausgeführt und angeordnet ist, dass er die Abstände zu zwei Referenzpunkten (250, 252) am ersten Referenzelement (210) messen kann,
wobei die beiden Referenzpunkte (250, 252) in einem definierten Verhältnis zueinander angeordnet sind.

3. Lokalisierungssystem nach Anspruch 1,
**dadurch gekennzeichnet, dass**
der erste Entfernungssensor (238) so ausgeführt und angeordnet ist, dass er einen dritten Abstand und einen zum dritten Abstand senkrechten, vierten Abstand zu einem zweiten Referenzelement messen kann, wobei das erste Referenzelement und das zweite Referenzelement in einem definierten Verhältnis zueinander angeordnet sind.

4. Lokalisierungssystem nach Anspruch 1 oder 2,
**dadurch gekennzeichnet, dass**
das Lokalisierungssystem (30, 130) einen zweiten Entfernungssensor (40) aufweist, mittels welchem ein dritter Abstand und ein zum dritten Abstand senkrechter, vierter Abstand zu einem zweiten Referenzelement (111) gemessen werden kann, wobei das erste Referenzelement (110) und das zweite Referenzelement (111) in einem definierten Verhältnis zueinander angeordnet sind.

5. Lokalisierungssystem nach Anspruch 4,
**dadurch gekennzeichnet, dass**
der zweite Entfernungssensor (40) als ein 2D-Profil-Scanner ausgeführt ist.

6. Montagevorrichtung zur Durchführung eines Installationsvorgangs in einem Aufzugschacht (103) einer Aufzuganlage (101), welche ein Lokalisierungssystem (130) nach einem der Ansprüche 1 bis 5 aufweist.

7. Montagevorrichtung nach Anspruch 6,
**dadurch gekennzeichnet, dass**
die Montagevorrichtung (1) eine Trägerkomponente (3) und eine Installationskomponente (5) aufweist, wobei die Trägerkomponente (3) dazu ausgelegt ist, relativ zum Aufzugschacht (103) verlagert und in verschiedenen Höhen innerhalb des Aufzugschachts (103) positioniert zu werden und die Installationskomponente (5) an der Trägerkomponente (3) gehalten und dazu ausgelegt ist, einen Montageschritt im Rahmen des Installationsvorgangs zumindest teilautomatisch auszuführen und das Lokalisierungssystem (130) an der Trägerkomponente (3) angeordnet ist.

8. Montagevorrichtung nach Anspruch 7,
**dadurch gekennzeichnet, dass**
die Montagevorrichtung (1) einen Sensor (9), welcher an der Installationskomponente (5) angeordnet werden kann und mittels welchem ein Abstand zu einem ersten Referenzelement (110, 210) gemessen werden kann, und eine Steuerungseinrichtung (42) aufweist,
wobei die Steuerungseinrichtung (42) dazu vorgesehen ist,
- eine relative Lage der Montagevorrichtung (1) in einer Fixierungsposition bezüglich des ersten langgestreckten Referenzelements (110, 210) im Aufzugschacht (103) unter Nutzung des an der Installationskomponente (5) angeordneten Sensors (121) zu bestimmen,
- die relative Lage des ersten Referenzelements (110, 210) bezüglich mindestens zwei unterschiedlichen Sensorpositionen und damit Positionen der Installationskomponente (5) zu bestimmen und
- die Fixierungsposition im Aufzugschacht (103) in Abhängigkeit der relativen Lage der Montagevorrichtung (1) bezüglich des ersten Referenzelements (110, 210) zu bestimmen.

9. Verfahren zur Bestimmung einer aktuellen Position eines Lokalisierungssystems (30, 130, 230) in einem sich in einer Haupterstreckungsrichtung (108) erstreckenden Aufzugschacht (103) einer Aufzuganlage (101), mit wenigstens den folgenden Schritten:
- Einbringen eines ersten langgestreckten Referenzelements (110, 210) in den Aufzugschacht (103), welches in einer Haupterstreckungsrichtung (108) des Aufzugschachts (103) ausgerichtet ist,
- Messen eines ersten Abstands und eines zum ersten Abstand senkrechten, zweiten Abstands zum ersten Referenzelement (110, 210) mit einem ersten Entfernungssensor (38, 138, 238),
- Messen einer Rotation des Lokalisierungssystems (30, 130, 230) um eine horizontal verlaufende erste Achse (x) und eine horizontal verlaufende, zur ersten Achse senkrechten, zweiten Achse (y),
- Bestimmung einer Position des Lokalisierungssystems (30, 130, 230) in Haupterstreckungsrichtung (108) des Aufzugschachts (103) und
- Bestimmen der aktuellen Position des Lokalisierungssystems (30, 130, 230) auf Basis des genannten ersten Abstands, des genannten zweiten Abstands, der genannten Rotation und der genannten Position in Haupterstreckungsrichtung (108) des Aufzugschachts (103).
wobei der erste Entfernungssensor (38, 138, 238) bei der Messung des ersten Abstands und des zweiten Abstands an einer festen Position gegenüber dem ersten Referenzelement (110, 210) bleibt,
**dadurch gekennzeichnet, dass**
der erste Entfernungssensor (38, 138, 238) als ein 2D-Profil-Scanner ausgeführt ist.

10. Verfahren nach Anspruch 9,
**dadurch gekennzeichnet, dass**
mittels des ersten Entfernungssensors (230) die Abstände zu zwei Referenzpunkten (250, 252) am ersten Referenzelement (210) gemessen werden, wobei die beiden Referenzpunkte (250, 252) in einem definierten Verhältnis zueinander angeordnet sind und alle genannten Abstände zur Bestimmung der aktuellen Position des Lokalisierungssystems (230) verwendet werden.

11. Verfahren nach Anspruch 9,
**dadurch gekennzeichnet, dass**
mittels des ersten Entfernungssensors (238) ein dritter Abstand und ein zum dritten Abstand senkrechter, vierter Abstand zu einem zweiten Referenzelement gemessen wird, wobei das erste Referenzelement und das zweite Referenzelement in einem definierten Verhältnis zueinander angeordnet sind.

12. Verfahren nach Anspruch 9,
**dadurch gekennzeichnet, dass**
mittels eines zweiten Entfernungssensors (40) ein dritter Abstand und ein zum dritten Abstand senkrechter, vierter Abstand zu einem zweiten Referenzelement (111) gemessen wird und der genannte dritte Abstand und der genannte vierte Abstand zur Bestimmung der aktuellen Position des Lokalisierungssystems (30, 130) verwendet werden, wobei das erste Referenzelement (110) und das zweite Referenzelement (111) in einem definierten Verhältnis zueinander angeordnet sind.

13. Verfahren nach Anspruch 11 oder 12,
**dadurch gekennzeichnet, dass**
eine erste gemeinsame Montageplatte (114) im Aufzugschacht (103) befestigt wird, an welcher erste Enden (112, 113) des ersten und zweiten Referenzelements (110, 111) befestigt sind.

14. Verfahren nach Anspruch 13,
**dadurch gekennzeichnet, dass**
eine zweite gemeinsame Montageplatte (117) im Aufzugschacht (103) befestigt wird, an welcher zweite Enden (115, 116) des ersten und zweiten Referenzelements (110, 111) gefestigt sind.

15. Verfahren nach einem der Ansprüche 9 bis 14,
**dadurch gekennzeichnet, dass**
das erste und/oder zweite Referenzelement (110, 111) zwischen seinen Enden (112, 115; 113, 116) zur Verminderung von Schwingungen gegenüber dem Aufzugschacht (103) fixiert wird.

## Claims

1. A locating system for determining a current position in an elevator shaft (103) of an elevator installation (101) extending in a main extension direction (108), the locating system (30, 130, 230) comprising:
- a first distance sensor (38, 138, 238) by means of which a first distance and a second distance, which is perpendicular to the first distance, from a first reference element (110, 210) can be measured,
- a tilt sensor (44, 144) by means of which a rotation about a horizontally extending first axis (x) and a horizontally extending second axis (y) that is perpendicular to the first axis can be measured, and
- a measuring system (48, 148) by means of which a position of the locating system (30, 130, 230) can be determined in the main extension direction (108) of the elevator shaft (103),
wherein
the first distance sensor (38, 138, 238) remains in a fixed position relative to the first reference element (110, 210) while measuring the first distance and the second distance, **characterized in that** the first distance sensor (38, 138, 238) is configured as a 2D profile scanner.

2. The locating system according to claim 1,
**characterized in that**
the first distance sensor (238) is constructed and arranged such that it can measure the distances from two reference points (250, 252) on the first reference element (210), the two reference points (250, 252) being arranged in a defined relationship to one another.

3. The locating system according to claim 1,
**characterized in that**
the first distance sensor (238) is constructed and arranged such that it can measure a third distance and a fourth distance, which is perpendicular to the third distance, from a second reference element, the first reference element and the second reference element being arranged in a defined relationship to one another.

4. The locating system according to claim 1 or 2,
**characterized in that**
the locating system (30, 130) comprises a second distance sensor (40), by means of which a third distance and a fourth distance, which is perpendicular to the third distance, from a second reference element (111) can be measured, the first reference element (110) and the second reference element (111) being arranged in a defined relationship to one another.

5. The locating system according to claim 4,
**characterized in that**
the second distance sensor (40) are constructed as a 2D profile scanner.

6. An installation device for carrying out an installation process in an elevator shaft (103) of an elevator installation (101) which comprises a locating system (130) according to any of claims 1 to 5.

7. The installation device according to claim 6,
**characterized in that**
the installation device (1) comprises a carrier component (3) and an installation component (5), the carrier component (3) being designed to be moved relative to the elevator shaft (103) and positioned at different heights within the elevator shaft (103), and the installation component (5) being retained on the carrier component (3) and being designed to carry out an installation step as part of the installation process at least partially automatically and the locating system (130) being arranged on the carrier component (3).

8. The installation device according to claim 7,
**characterized in that**
the installation device (1) comprises a sensor (9) which can be arranged on the installation component (5) and by means of which a distance from a first reference element (110, 210) can be measured, and comprises a control apparatus (42),
the control apparatus (42) being provided
- to determine a relative position of the installation device (1) in a fixing position with respect to the first elongate reference element (110, 210) in the elevator shaft (103) using the sensor (121) arranged on the installation component (5),
- to determine the relative position of the first reference element (110, 210) with respect to at least two different sensor positions and thus positions of the installation component (5) and
- to determine the fixing position in the elevator shaft (103) on the basis of the relative position of the installation device (1) with respect to the first reference element (110, 210).

9. A method for determining a current position of a locating system (30, 130, 230) in an elevator shaft (103) of an elevator installation (101) extending in a main extension direction (108), comprising at least the following steps:
- inserting a first elongate reference element (110, 210) into the elevator shaft (103) which is aligned in a main extension direction (108) of the elevator shaft (103),
- measuring a first distance and a second distance, which is perpendicular to the first distance, from the first reference element (110, 210) using a first distance sensor (38, 138, 238),
- measuring a rotation of the locating system (30, 130, 230) about a horizontally extending first axis (x) and a horizontally extending second axis (y) that is perpendicular to the first axis,
- determining a position of the locating system (30, 130, 230) in the main extension direction (108) of the elevator shaft (103) and
- determining the current position of the locating system (30, 130, 230) on the basis of said first distance, said second distance, said rotation, and said position in the main extension direction (108) of the elevator shaft (103).
wherein
the first distance sensor (38, 138, 238) remains in a fixed position relative to the first reference element (110, 210) when measuring the first distance and the second distance **characterized in that** the first distance sensor (38, 138, 238) is designed as a 2D profile scanner.

10. The method according to claim 9,
**characterized in that**
the distances from two reference points (250, 252) on the first reference element (210) are measured by means of the first distance sensor (230), the two reference points (250, 252) being arranged in a defined relationship to one another and all of said distances being used to determine the current position of the locating system (230).

11. The method according to claim 9,
**characterized in that**
a third distance and a fourth distance, which is perpendicular to the third distance, from a second reference element are measured by means of the first distance sensor (238), the first reference element and the second reference element being arranged in a defined relationship to one another.

12. The method according to claim 9,
**characterized in that**
a third distance and a fourth distance, which is perpendicular to the third distance, from a second reference element (111) are measured by means of a second distance sensor (40) and said third distance and fourth distance are used to determine the current position of the locating system (30, 130), the first reference element (110) and the second reference element (111) being arranged in a defined relationship to one another.

13. The method according to claim 11 or 12,
**characterized in that**
a first common mounting plate (114) is fastened in the elevator shaft (103), to which first ends (112, 113) of the first and second reference elements (110, 111) are fastened.

14. The method according to claim 13,
**characterized in that**
a second common mounting plate (117) is mounted in the elevator shaft (103), to which second ends (115, 116) of the first and second reference elements (110, 111) are fastened.

15. The method according to any of claims 9 to 14,
**characterized in that**
the first and/or second reference element (110, 111) is fixed between its ends (112, 115, 113, 116) in order to reduce vibrations relative to the elevator shaft (103).

## Revendications

1. Système de localisation destiné à déterminer une position actuelle dans une cage d'ascenseur (103) d'une installation d'ascenseur (101) s'étendant dans une direction principale (108), le système de localisation (30, 130, 230) comprenant :
- un premier capteur de distance (38, 138, 238), au moyen duquel une première distance et une deuxième distance, perpendiculaire à la première distance, par rapport à un premier élément de référence (110, 210) peuvent être mesurées,
- un capteur d'inclinaison (44, 144), au moyen duquel il est possible de mesurer une rotation autour d'un premier axe (x) s'étendant horizontalement et d'un deuxième axe (y) s'étendant horizontalement et perpendiculaire au premier axe, et
- un système de mesure (48, 148) permettant de déterminer une position du système de localisation (30, 130, 230) dans la direction principale (108) de la cage d'ascenseur (103),
le premier capteur de distance (38, 138, 238) restant dans une position fixe par rapport au premier élément de référence (110, 210) lors de la mesure de la première distance et de la deuxième distance,
**caractérisé en ce que**
le premier capteur de distance (38, 138, 238) est réalisé sous la forme d'un scanner de profil 2D.

2. Système de localisation selon la revendication 1,
**caractérisé en ce que**
le premier capteur de distance (238) est conçu et disposé de manière à pouvoir mesurer les distances par rapport à deux points de référence (250, 252) situés sur le premier élément de référence (210), les deux points de référence (250, 252) étant disposés selon un rapport défini l'un par rapport à l'autre.

3. Système de localisation selon la revendication 1,
**caractérisé en ce que**
le premier capteur de distance (238) est conçu et disposé de manière à pouvoir mesurer une troisième distance et une quatrième distance, perpendiculaire à la troisième distance, par rapport à un deuxième élément de référence, le premier élément de référence et le deuxième élément de référence étant disposés selon un rapport défini l'un par rapport à l'autre.

4. Système de localisation selon la revendication 1 ou 2,
**caractérisé en ce que**
le système de localisation (30, 130) comporte un deuxième capteur de distance (40) au moyen duquel une troisième distance et une quatrième distance, perpendiculaire à la troisième distance, par rapport à un deuxième élément de référence (111) peuvent être mesurées, le premier élément de référence (110) et le deuxième élément de référence (111) étant disposés selon un rapport défini l'un par rapport à l'autre.

5. Système de localisation selon la revendication 4,
**caractérisé en ce que**
le deuxième capteur de distance (40) est réalisé sous la forme d'un scanner de profil 2D.

6. Dispositif de montage destiné à réaliser une opération d'installation dans une cage d'ascenseur (103) d'une installation d'ascenseur (101), qui comporte un système de localisation (130) selon l'une des revendications 1 à 5.

7. Dispositif de montage selon la revendication 6,
**caractérisée en ce que**
le dispositif de montage (1) comprend un élément de support (3) et un élément d'installation (5), l'élément de support (3) étant conçu pour être déplacé par rapport à la cage d'ascenseur (103) et positionné à différentes hauteurs à l'intérieur de celle-ci, et l'élément d'installation (5) est maintenu sur le composant de support (3) et est conçu pour exécuter, au moins de manière semi-automatique, une étape de montage dans le cadre du processus d'installation, et le système de localisation (130) est disposé sur le composant de support (3).

8. Dispositif de montage selon la revendication 7,
**caractérisé en ce que**
le dispositif de montage (1) comporte un capteur (9), qui peut être disposé sur le composant d'installation (5) et au moyen duquel une distance par rapport à un premier élément de référence (110, 210) peut être mesurée, ainsi qu'un dispositif de commande (42),
le dispositif de commande (42) étant prévu pour
- déterminer une position relative du dispositif de montage (1) dans une position de fixation ( ) par rapport au premier élément de référence allongé (110, 210) dans la cage d'ascenseur (103) en utilisant le capteur (121) disposé sur le composant d'installation (5),
- déterminer la position relative du premier élément de référence (110, 210) par rapport à au moins deux positions différentes du capteur et, par conséquent, les positions du composant d'installation (5), et
- déterminer la position de fixation dans la cage d'ascenseur (103) en fonction de la position relative du dispositif de montage (1) par rapport au premier élément de référence (110, 210).

9. Procédé pour déterminer une position actuelle d'un système de localisation (30, 130, 230) dans une cage d'ascenseur (103) d'une installation d'ascenseur (101) s'étendant dans une direction principale (108), comprenant au moins les étapes suivantes :
- introduction dans la cage d'ascenseur (103) d'un premier élément de référence allongé (110, 210), qui est aligné dans une direction principale (108) de la cage d'ascenseur (103),
- Mesure d'une première distance et d'une deuxième distance, perpendiculaire à la première, par rapport au premier élément de référence (110, 210) à l'aide d'un premier capteur de distance (38, 138, 238),
- mesurer une rotation du système de localisation (30, 130, 230) autour d'un premier axe (x) horizontal et d'un deuxième axe (y) horizontal, perpendiculaire au premier axe,
- déterminer une position du système de localisation (30, 130, 230) dans la direction principale (108) de la cage d'ascenseur (103) et
- déterminer la position actuelle du système de localisation (30, 130, 230) sur la base de ladite première distance, de ladite deuxième distance, de ladite rotation et de ladite position dans la direction principale (108) de la cage d'ascenseur (103).
le premier capteur de distance (38, 138, 238) restant dans une position fixe par rapport au premier élément de référence (110, 210) lors de la mesure de la première distance et de la deuxième distance,
**caractérisé en ce que**
le premier capteur de distance (38, 138, 238) est réalisé sous la forme d'un scanner de profil 2D.

10. Procédé selon la revendication 9,
**caractérisé en ce que**
à l'aide du premier capteur de distance (230), les distances par rapport à deux points de référence (250, 252) situés sur le premier élément de référence (210) sont mesurées, les deux points de référence (250, 252) étant disposés selon un rapport défini l'un par rapport à l'autre, et toutes les distances mentionnées sont utilisées pour déterminer la position actuelle du système de localisation (230).

11. Procédé selon la revendication 9,
**caractérisé en ce que**
au moyen du premier capteur de distance (238), on mesure une troisième distance et une quatrième distance, perpendiculaire à la troisième, par rapport à un deuxième élément de référence, le premier élément de référence et le deuxième élément de référence étant disposés selon un rapport défini l'un par rapport à l'autre.

12. Procédé selon la revendication 9,
**caractérisé en ce que**
à l'aide d'un deuxième capteur de distance (40), on mesure une troisième distance et une quatrième distance, perpendiculaire à la troisième distance, par rapport à un deuxième élément de référence (111), et ladite troisième distance et ladite quatrième distance sont utilisées pour déterminer la position actuelle du système de localisation (30, 130), le premier élément de référence (110) et le deuxième élément de référence (111) étant disposés selon un rapport défini l'un par rapport à l'autre.

13. Procédé selon la revendication 11 ou 12,
**caractérisé en ce que**
une première plaque de montage commune (114) est fixée dans la cage d'ascenseur (103), sur laquelle sont fixées les premières extrémités (112, 113) des premier et deuxième éléments de référence (110, 111).

14. Procédé selon la revendication 13,
**caractérisé en ce que**
une deuxième plaque de montage commune (117) est fixée dans la cage d'ascenseur (103), sur laquelle sont fixées les deuxièmes extrémités (115, 116) des premier et deuxième éléments de référence (110, 111) .

15. Procédé selon l'une des revendications 9 à 14,
**caractérisé en ce que**
le premier et/ou le deuxième élément de référence (110, 111) est fixé entre ses extrémités (112, 115 ; 113, 116) afin de réduire les vibrations par rapport à la cage d'ascenseur (103).
